# EUROPEAN PATENT APPLICATION

(11) **EP 3 663 336 A1**
(43) Date of publication of application: **10.06.2020**
(21) Application number: 19213684.4
(22) Date of filing: 04.12.2019
(51) Int. Cl.: C08J 5/18

(54) **DISINTEGRABLE THIN FILM ADHESIVE BARRIER**

(30) Priority: 04.12.2018 US 201862775145 P
(71) Applicant: Adhesives Research, Inc., Glen Rock, Pennsylvania 17327 (US)
(72) Inventor: NOLEN, Christina T, Eldersburg, Pennsylvania 21784 (US); GORDON, Thomas R, Harrisburg, Pennsylvania 17112 (US)
(74) Representative: Beck Greener LLP

(57) **Abstract**

A disintegrable film is disclosed, including at least one water-soluble polymer having a molecular weight greater than 700 kDa, and at least one water-soluble plasticizer having a molecular weight less than 0.8 kDa. A further disintegrable film is disclosed wherein the disintegrable film is a tacky adhesive film, includes a storage modulus of 3 x 10⁶ dyn/cm² or less at 1 rad/s and 25 °C, includes a disintegration resistance factor sufficient to resist disintegration for a disintegration time after contact with a disintegrating fluid, includes a tan δ evaluated at an angular frequency of 0.01 rad/s and 25 °C of less than 1, the at least one water-soluble polymer constitutes between 3 wt% to 70 wt% of the disintegrable film, and the at least one water-soluble plasticizer constitutes between 30 wt% to 60 wt% of the disintegrable film.

## Description

This application claims the benefit of, and priority to, U.S. Provisional Application No. 62/775,145, titled "Disintegrable Thin Film Adhesive Barrier," which was filed on December 4, 2018, and which is hereby incorporated by reference in its entirety.

The present invention is directed to disintegrable films, diagnostic devices containing such films, and methods for their use. More particularly, the present invention provides in one embodiment water-soluble films which function as adhesives and restrict fluid flow in diagnostic devices.

*In vitro* diagnostic devices are widely used. Useful diagnostic assay devices depend on biospecific affinity reactions for detecting, isolating, and/or separating cells, proteins, bacteria, viruses, nucleic acid sequences, and various other materials or compounds of interest. Many medical diagnostic tests require the detection, isolation, and/or measurement of specific compounds present in biological fluids such as blood, saliva, and urine.

Diagnostic tests may be conducted using a variety of devices, for example, electronic devices, biosensors, lateral flow devices, test strips, microarrays, microfluidics, vertical flow devices, assay cartridges, and test cards, among others. Often, the necessary materials to conduct a test are provided in the form of a test kit that may include a particular testing device. Some testing devices include the reagent or reagents necessary to perform a particular test. For other testing devices, the reagent or reagents may be obtained separately and used in connection with the testing device.

Immunoassays are another form of assay that utilize antibody-antigen reactions in order to analyze samples of interest. There are numerous known immunoassay techniques, some of which are described in "The Immunoassay Handbook" Nature Publishing Group, 2001. For example, the enzyme-linked immunosorbent assay (ELISA) or the radio-immunoassay (RIA) are popular techniques. Such methods are useful for rapid results and detection of specific antigens.

Substances which may be detected, measured, and/or isolated using an *in vitro* diagnostic device include, for example: glucose; cholesterol; proteins, for example, various enzymes, such as amylase and creatine kinase; substances-of-abuse, for example, drugs regulated by law with respect to possession and use, such as methamphetamines; cells; bacteria; viruses; and nucleic acid sequences, among others. For example, pregnancy testing may be conducted using test strips to detect human chorionic gonadotropin (hCG). Such a test is described in U.S. Pat. Nos. 6,403,298 and 4,496,654. Also, diabetics and health care professionals use test strips for measuring blood glucose levels. U.S. Pat. No. 6,270,637 describes an electrochemical biosensor blood glucose test strip. Diagnostic testing, as described in U.S. Pat. No. 5,846,751, is used to detect helicobacter pylori bacterium in the human stomach to diagnose gastric disorders and duodenal ulcer disease. U.S. Pat. No. 6,645,731 describes the isolation of cancer cells from a biochemical matrix. U.S. Pat. No. 7,887,815 describes how peptides may be used in diagnostic assays to specifically bind to antibodies related to certain diseases such as Lyme disease. WIPO Pat. App. No. WO2017/013267A1 describes a method of assessing blood cells of interest using a vertical flow assay device.

Lateral flow testing devices are commonly used. Typically, a lateral flow device includes a test strip, on which one or more reagents are present. To use the lateral flow testing device, a fluid sample is deposited onto the strip and migrates by capillary action along the strip where chemical reactions take place depending upon the presence or absence of the analyte *in situ.* Often, at least one reagent is included which manifests a detectable signal, for example a color change, in the presence of a minimal amount of the analyte of interest.

Vertical flow testing devices are similar to lateral flow devices, but differ in the direction of fluid flow. In a vertical flow device, a fluid sample, once deposited, will flow vertically or in a downward direction to where the chemical reactions take place.

To fabricate test strips, aqueous solutions containing a reagent, for example, enzymes or antibodies, are localized on a supporting layer, which is a solid material, such as membrane support, an electrochemical sensor, cellulose or paper. The reagents are selected as necessary or helpful in detection of the analyte in question. Typically, the reagent is placed on the membrane by spraying, coating, or striping and then dried.

Other diagnostic testing devices require the use of various aqueous reagents. The reagents are typically applied by pipette directly to the sample to be tested.

In some such diagnostic devices, samples are placed through numerous treatments prior to application to the diagnostic device. These treatments sometimes require certain incubation times to ensure that the necessary reactions occur to a sufficient degree prior to moving to the next step of analysis (for example, a liquid sample with an antigen may require some specific amount of time to react with an antibody conjugate). After application of a small volume of analyte to the diagnostic device, the aqueous analyte typically flows through the device at relatively high speed, eliminating the possibility of sufficient incubation time within the device.

A disintegrable film may be used to provide the dual benefit of arresting flow within a diagnostic device and also acting as an adhesive to provide intimate contact between flow paths of a diagnostic device. A disintegrable film may act as a gate or retention layer for the liquid so that there is enough time for a reaction to occur before the liquid is allowed to flow to another part of the assay while also being used to help form the device in its assembled state.

The present invention provides disintegrable film adhesive compositions which yield films of sufficient stability and desirable disintegration profiles for use in diagnostic testing. As used herein, "disintegrable" has a meaning which is interchangeable with "dissolvable".

According to a first aspect of the present invention, there is provided a disintegrable film comprising at least one water-soluble polymer having a molecular weight greater than 500 kDa, preferably greater than 700 kDa, and at least one water-soluble plasticizer having a molecular weight less than 1 kDa, preferably less than 0.8 kDa.

In an exemplary embodiment, a disintegrable film includes at least one water-soluble polymer having a molecular weight greater than 700 kDa, and at least one water-soluble plasticizer having a molecular weight less than 0.8 kDa, wherein the disintegrable film is a tacky adhesive film, preferably including a storage modulus of 3 x 10⁶ dyn/cm² or less at 25 °C and 1 rad/s. Additionally or alternatively, the disintegrable film includes a disintegration resistance factor sufficient to resist disintegration for a disintegration time after contact with a disintegrating fluid, and/or includes a tan δ evaluated at an angular frequency of 0.01 rad/s and 25 °C of less than 1. Typically, the at least one water-soluble polymer constitutes between 3 wt% to 70 wt% of the disintegrable film, and the at least one water-soluble plasticizer constitutes between 30 wt% to 60 wt% of the disintegrable film.

A disintegrable film according to an exemplary embodiment of the invention is preferably in the form of a monolayer which may be cut to any desired size or shape for use in diagnostic testing applications.

Other features and advantages of the present invention will be apparent from the following more detailed description of the preferred embodiment, taken in conjunction with the accompanying drawings, which illustrate, by way of example, the principles of the invention.
FIG. 1 illustrates a first diagnostic testing device according to an embodiment of the present disclosure.
FIG. 2 illustrates a second diagnostic testing device according to an embodiment of the present disclosure.
FIG. 3 illustrates a third diagnostic testing device according to an embodiment of the present disclosure.
FIG. 4 is a cross-sectional view along lines 4-4 of the third diagnostic testing device of FIG. 3, according to an embodiment of the present disclosure.

Wherever possible, the same reference numbers will be used throughout the drawings to represent the same parts.

In recent years, dissolvable films for use in diagnostic tests have gained much attention, but as non-tacky films. Such dissolvable films have been specifically designed to not absorb moisture in order to retain mechanical strength and stability. De-tackifiers have been used in order to prevent and/or control this moisture uptake. In contrast, disintegrable films of the present invention are designed to absorb moisture. Without being bound by theory, it is believed that the combination of absorbed moisture and low molecular weight plasticizer typically contribute to the present films being tacky and acting as pressure sensitive adhesives. The high molecular weight component may contribute to the present films having mechanical strength and stability, despite the present disintegrable films' lower moduli and minimal or absent cross-linking.

Another notable difference between present disintegrable films and conventional films for diagnostic applications may include how they are applied to surfaces. Conventional films are non-tacky and must be applied through a heat sealing process. Such heat sealing processes typically involve compressing films onto substrates with heated platens set to temperatures in excess of 60 °C, through heated lamination of layers in excess of 60 °C or by sonic welding which may also result in localized heating of the film, all of which may be problematic in applications in which temperature sensitive biological components are in close proximity. In contrast, present embodiments of disintegrable films may be tacky, acting as a pressure-sensitive adhesive tape that may be applied with only the application of pressure at room temperature, allowing for the bonding of layers or membranes together. Application of such disintegrable films may be performed utilizing common roll-to-roll lamination techniques or by using pressurized platens without application of heat. In an assay, this may support configuration with intimate contact and uniform dissolution between each layer. Further, because such disintegrable films may be applied at room temperature, such disintegrable films may be particularly useful for processing devices and reagents with critical temperature requirements, including those which contain biological materials susceptible to degradation upon exposure to elevated temperatures.

As used herein, "analyte" refers to a molecule or other substance in the sample which is to be detected. By way of non-limiting example, an analyte may be: a biomarker, such as creatinine or cholesterol; an electrolyte, such as magnesium, potassium, calcium, or phosphorus; a ligand, which is mono- or polyepitopic, antigenic or haptenic; a single compound, such as chorionic gonadotropin, glucose, prostate specific antigen; a plurality of compounds which share at least one common epitopic site; an epitopic site of a viral, bacterial, or other pathogen; a receptor or an antibody, or any other chemical or biological substance; a compound; or a material suspected of being present in a sample of interest, including, but not limited to, a toxic substance, such as a pollutant, or a biological or chemical warfare agent.

The disintegrable film includes at least one high molecular weight water-soluble polymer or polymer component and at least one water-soluble plasticizer or plasticizer component, and optionally may further contain additional water-soluble polymers or polymer components of lower molecular weights. The disintegrable film may be used to provide bonding between opposing fluid transporting layers, such that the disintegrable film provides intimate contact and also acts as a temporary barrier to fluid flow. Such bonding may occur at room temperature. Optionally, the film may include a filler, which may be a dispersed phase or particle within the disintegrable film to modify the disintegration profile of the disintegrable film. Optionally, the film may contain one or more reagents targeted to react with an analyte of interest or other reagents, such that the film may be used in a particular diagnostic test.

Reference will now be made in detail to embodiments of the present invention, which, together with the following examples, serve to explain the principles of the invention. These embodiments are described in sufficient detail to enable those skilled in the art to practice the invention, and it is to be understood that other embodiments may be utilized, and that various structural, biological, physical, and chemical changes may be made without departing from the scope of the present invention.

In one embodiment, a disintegrable film acts as an adhesive to bond layers in a diagnostic device while also serving as a barrier to fluid flow for a predetermined period of time within a fluid flow path of the diagnostic device. The disintegrable film may be die cut and adhered with pressure to a testing device or test strip used in various diagnostic techniques, including, but not limited to, immunoassays, chemical analysis, cell separations, toxicity testing, food testing, environmental analysis, and emergency response test kits. A single disintegrable film with adhesive properties may be used. Alternatively, multiple disintegrable films may also be used in a diagnostic test device.

In one embodiment, the disintegrable films include at least one high molecular weight water-soluble film forming polymer or polymer component and at least one water-soluble plasticizer or plasticizer component. In some embodiments, the films further include a low molecular weight water-soluble film-forming polymer or polymer component. Optionally, the films may include a humectant, filler, reagent, and/or other excipients in suitable amounts as further described below, and which may be determined by one of ordinary skill in the art pursuant to the guidance provided by the examples and teachings herein. Preferably the films will have a thickness in the range of 0.3 mil (8 µm) to 10 mil (250 µm), alternatively in the range of 0.3 mil (8 µm) to 8 mil (200 µm), alternatively in the range of 0.4 mil (10 µm) to 2 mil (50 µm), although various other thicknesses are suitable as desired for particular applications as described in more detail below. As used herein, the unit "mil" refers to one thousandth of an inch (25 µm).

Each disintegrable film may be characterized by its stability and its disintegration profile (the speed at which the disintegrable film will disintegrate in an aqueous media). In known dissolvable films, surfactants have been used to affect the disintegration speed and decrease the time required for complete film disintegration. In one embodiment of the present disclosure, disintegrable film compositions rapidly disintegrate upon application of a disintegration fluid, such as, but not limited to, blood, saliva, urine, and other aqueous biological and environmental fluids. Typically, the disintegrable film compositions have sufficient stability without requiring the use of any surfactant. While a surfactant is optional in certain embodiments, as described below, other embodiments are surfactant-free or essentially free of surfactants. The term "essentially free of surfactants" refers to trace amounts or higher levels of surfactants that are sufficiently low so as not to substantially increase the disintegration rate of the film composition following contact with a disintegrating fluid.

In one embodiment, a disintegrable film containing one or more reagents improves the stability of the reagents. Additionally, the reagents may be used more effectively and efficiently, since the film may be localized to a particular area within a testing device and may be handled easily as compared to an aqueous solution. Further, providing reagents in film form may promote efficient use and minimize reagent wastage since a film may be divided into individual segments having a desired amount of reagent, and the need for spraying, coating, or striping a reagent may thus be eliminated, if desired.

The water-soluble film-forming polymers or polymer components of the disintegrable films according to the present invention may include, but are not limited to, water-soluble hydroxypropylmethyl cellulose, hydroxyethyl cellulose, hydroxypropyl cellulose, polyvinylpyrrolidone, poly(N-vinylpyrrolidone-co-vinyl acetate), other N-vinylpyrrolidone-based copolymers, carboxymethyl cellulose, sodium carboxy methyl cellulose, methyl cellulose, polyvinyl alcohol, sodium alginate, polyethylene glycol, xanthan gum, tragacanth, guar gum, gum arabic, carrageenan, polyacrylic acid, methylmethacrylate copolymer, carboxyvinyl copolymers, and various combinations and copolymers of the above polymers, and other known water-soluble polymers, cellulose derivatives, and/or gums, among others.

Suitable low molecular weight plasticizers or plasticizer compounds include, but are not limited to: polyethylene glycol (PEG), such as Kollisolv PEG 400, by BASF; polyoxamers, such as Kolliphor P407 by BASF; or mixtures of such polymers; triacetin; triethyl citrate; glycerin; mannitol; xylitol; sorbitol; and various other polyalcohols, copolymers thereof, or combinations thereof Other compounds having plasticizer and/or humectant properties may be satisfactorily employed, as well.

Particularly beneficial properties of film strength and disintegration profile are obtained when the water-soluble polymers or polymer components include a combination of high molecular weight polymers, particularly those of 500 kDa or higher, such as 700 kDa or higher, including up to 1,000 kDa, alternatively 1,500 kDa, alternatively 2,000 kDa, or higher, and low molecular weight plasticizers having molecular weights less than 1 kDa, alternatively less than 0.8 kDa, or less. By way of example, in one embodiment, a combination of PVP K-90 polymer by Ashland (molecular weight of 1,000 kDa to 1,700 kDa) and polyethylene glycol 400 (molecular weight of 0.4 kDa) forms a suitable film. The molecular weights recited herein are provided as weight averages.

The weight average molecular weight of the polymers is typically measured using Size Exclusion Chromatography (SEC), also known as Gel Permeation Chromatography (GPC). The exact operating parameters may be determined by the person skilled in the art through the selection of an appropriate column and an appropriate mobile phase (which may be a solvent, aqueous or a mixed solvent/aqueous mobile phase and may contain a dissolved salt) together with a refractive index detector. The SEC instrument is typically calibrated with an appropriately chosen molecular weight standard. Suitable standards include but are not limited to polyethylene glycol (PEG), polyethylene oxide (PEO), polyacrylic acid (PAA), polystyrene and polymethylmethacrylate (PMMA).

Various concentrations of each component may be utilized. Such concentrations will typically be in the range of 3% to 70% based on the total weight of the dry disintegrable film. In one embodiment, the concentration for the high molecular weight polymer(s) is 3% to 70% and the concentration of the low molecular weight plasticizer(s) is 30% to 60% of the dry disintegrable film.

Additional optional water-soluble polymers may be used in combination with the high molecular weight water-soluble polymers and the low molecular weight plasticizers. The optional component(s) may include reagents, glucose components, starches, thickeners, buffers, stabilizers, and/or additives, and may include any of the specific compounds listed below or other suitable compounds, which are water-soluble. Further, low molecular weight water-soluble polymers may be incorporated as additional optional components. These optional components may serve to meet a desired disintegration profile, but are present in amounts such that film strength is adequate for processing and dispensing. Various concentrations may be utilized. Optional additional water-soluble polymers may include polymers having a molecular weight less than 700 kDa.

Components of the same chemistry may be present in the film as both a polymer and plasticizer. By way of example, polyethylene oxide, in the form of, for example, Polyox WSR N10 by Dow Chemical having a molecular weight of 100 kDa, may serve as an optional low molecular weight water-soluble polymer, but may also be present in the formulation as a plasticizer, in the form of PEG 400.

The molecular weights of the water-soluble polymers may be determined as described in Keary, "Characterization of METHOCEL Cellulose Ethers by Aqueous SEC with Multiple Detectors," Carbohydrate Polymers Vol. 45, pp. 293-303 (2001), which is incorporated herein by reference.

Various other polymers may be selected by one of ordinary skill in the art given the teachings herein, provided that the polymer is water-soluble, and preferably includes a sufficient amount of a high molecular weight component to impart adequate stability, and a sufficient amount of a low molecular weight plasticizer to facilitate the desired film properties of the disintegration profile and adhesion upon application.

In some embodiments, the concentration for the high molecular weight polymer is 3% to 70% and the concentration of the low molecular weight plasticizer is 30% to 60% by weight of the dry disintegrable film. In some embodiments, the concentration for the high molecular weight polymer is 20% to 50% and the concentration of the low molecular weight plasticizer is 35% to 55% by weight of the dry disintegrable film.

It will be appreciated, however, that the amounts of high and low molecular weight components may be adjusted to achieve a desired disintegration profile for the disintegrable film. When slower disintegration is desired, the concentration of the high molecular weight polymer(s) may be increased relative to the concentration of the low molecular weight plasticizer(s). When faster disintegration is desired, the concentration of the low molecular weight plasticizer(s) may be increased relative to the concentration of the high molecular weight polymer(s). Additionally, the thickness of the film may be adjusted to achieve a desired disintegration profile. To increase the disintegration time, the film thickness may be increased. Adequate film strength should be maintained to allow for processing of the disintegrable film.

The amounts of high and low molecular weight components may also be adjusted to achieve adhesive properties in the disintegrable film. When higher tack is desired, the concentration of low molecular weight plasticizer may be increased. In addition, including hygroscopic polymers, such as polyvinyl pyrrolidone, will also improve tackiness. Such materials may be used to bond substrates simply through application of pressure at room temperature. This low temperature bonding is advantageous for applications with biologics that are susceptible to degradation at elevated temperatures. When a firmer film is desired, the concentration of high molecular weight component may be increased.

The adhesive properties or bond strength of the disintegrable films may be assessed through standard adhesion testing. The disintegrable film may be bonded to relevant substrates, including membranes (e.g., Fusion 5 supplied by GE Healthcare Life Sciences), plastic films, paper substrates, molded plastic parts, or other components in a diagnostic device and subsequently peeled from the substrate to determine bond strength. PSTC test 101 and ASTM standard D3330 provide standard methods for this analysis.

In one embodiment, in addition to a desired disintegration time, the films include adequate strength for processing, packaging, and administration without physical failure (e.g., breakage, fracture, or otherwise) during processing and normal handling prior to packaging and use in a desired diagnostic device or testing application. The stability, specifically, roll stability, may be determined through analysis by dynamic mechanical analysis. These properties of mechanical stability and rapid disintegration are the result of the unique combination of the components described herein. As used herein, "rapid" disintegration, indicates that the disintegrable film will dissolve in a reasonable amount of time, for example, less than 20 minutes, appropriate for a diagnostic test using common amounts of disintegrating fluid, for example, 5 µL to 100 µL.

An optional glucose component of thin films may be added to promote disintegration of the disintegrable film upon contact with a disintegrating fluid. Preferably, the glucose component comprises a water-soluble polymer or mixture of polymers having D-glucose units. The dextrose equivalent ("DE") of the glucose component is preferably within the range of 10 to 25, alternatively 15 to 20, although various other DE ranges may also be used. The glucose component may be prepared, for example, by the partial hydrolysis of starch to yield D-glucose polymer mixtures. Suitable commercially available glucose components include, but are not limited to, maltodextrin, corn syrup solids, sucrose, and dextrose. Maltodextrin having a DE of 16.5 to 19.5, such as that commercially available from Grain Processing Corp. ("GPC") under the trade name "Maltrin M180," is particularly suitable, although various other glucose containing polymers and mixtures may be utilized, including, for example, other grades of "Maltrin," "Lycatab DSH" (Roquette Freres), and "Star-Dri" (Tate & Lyle). Suitable concentrations as a weight percentage of the dry disintegrable film composition will typically be in the range of 2% to 20%, alternatively 3% to 15%, although other concentrations also may be used depending on the selection of other components and the desired disintegrable film properties.

In one embodiment, an optional starch component of films may be added to promote disintegration of the disintegrable film upon contact with a disintegrating fluid. The starch component may also serve to increase the solids content of the disintegrable film and add bulk. In a further embodiment, the starch component is a water-soluble polysaccharide composition containing amylose and/or amylopectin. Such compositions may be prepared by, for example, modifying natural starches, such as corn, wheat, rice, potato, or tapioca starch, to provide cold water-soluble instant starches. Various water-soluble compositions of amylose and/or amylopectin polysaccharides maybe used.

Typically, these may be made by heating a natural starch with steam to modify the natural starch product so that it is cold water-soluble.

Suitable commercially available instant starches include "PolarTex-Instant 12640," available from Cargill, Inc., "Instant Pure-Cote B792," (IPC B792) from Grain Processing Corporation, and various others may also be utilized. The starch component will typically have an amylose to amylopectin ratio in the range, for example, of 0 to 2.5. The starch may be incorporated in the wet film composition in any suitable amount, including, but not limited to, 2% to 50%, alternatively 3% to 35%, by weight, based on the dry film.

Further, thickeners, humectants, buffers, stabilizers, additives and/or other components may be added to the disintegrable film formulations according to the invention to provide a disintegrable film having desired properties. In certain embodiments it may be desirable to use disintegrable films that exhibit different disintegration times or disintegrate under different conditions, such as at elevated pH. In such cases, additional components may be added to the disintegrable film composition. For example, to configure the disintegrable film to disintegrate based in part on the pH level of the solubilizing fluid, a thickener, such as Carbopol 940 polymer by Lubrizol, may be added.

The disintegrable films may include a filler, which is typically a dispersed phase or particle. The filler may add bulk to the disintegrable film, increase the solids portion of the disintegrable film (which may aid in coating), and/or may cause the films to disintegrate faster upon contact with the disintegrating fluid, such as a biological sample or other aqueous material suspected of containing an analyte of interest.

The filler may be a reagent or an optional additional component. The filler may be an optional non-active component. Examples of such components include, but are not limited to, titanium oxide and microcrystalline cellulose, which is available under the name Avicel. Air or other gasses may also be used as a filler according to the invention. When air is employed as the filler, a surfactant (e.g., sodium lauryl sulfate ("SLS"), available under the name Stepanol, Polysorbate 80, or Pluracare F127 NF Prill) may be included in the film formulation. Without being bound by theory, it is believed that the surfactant does not itself serve to significantly increase the rate of disintegration of the disintegrable films; rather, the surfactant aids in the processing and formation of the disintegrable film. Specifically, the surfactant stabilizes the gaseous bubbles as a dispersed phase within a solution to allow the solution to be processed to form the disintegrable film containing the gas or air as a dispersed phase filler.

The particular components for a disintegrable film may be chosen as desired and as are compatible with a particular testing scheme. By way of example, the optional glucose component would typically be omitted from a disintegrable film to be employed in a blood glucose testing device.

The disintegrable film compositions according to the invention may be prepared by several methods, including, but not limited to, adding the combination of water-soluble polymer and water-soluble plasticizer along with any optional starch, glucose, reagent, or other ingredients to a solvent that is capable of dissolving them, such as water, ethanol or a mixture of ethanol and water, for example. Upon forming a homogeneous solution, any of the other optional components, such as other plasticizers, colorants, and/or other components may be blended into the polymer solution. Alternatively, all of the disintegrable film components may be added and concurrently blended to form a solution or dispersion. Also, a dry blend may be compounded by a V-blender. The dry blend may subsequently be used to form a solution or dispersion. Additionally, the dry blend may be subjected to a melt extrusion process to form a film upon cooling. It should be understood that no particular sequence of steps is required, except as needed to effectively prepare a desired disintegrable film composition. For example, if a particular sequence yields an undesirable precipitate, an alternative sequence may be used. If a reagent is employed, it may be soluble in the solution or it may be suspended or dispersed in the solution.

The solution or dispersion may be further processed into a film by any one of many casting, drawing, or extruding techniques. In one embodiment, the solution or dispersion is sprayed onto a support such as a release-treated belt. In another embodiment, the solution or dispersion is roll coated onto a release treated paper or film substrate.

After coating of the solution or dispersion onto a support surface, the solvent or water may be removed by radiant energy (such as infrared), heat, convection, vacuum, or any combination of these to yield a dry film. The resulting dry disintegrable film may be wound up into a roll for storage prior to further processing into individual films for specific diagnostic devices. Whether stored for future processing or immediately following removal of the solvent, the resulting disintegrable film may be removed from the support surface and subsequently processed for various end use applications.

The dry disintegrable film may be further processed by any suitable technique, including, but not limited to, by die-cutting or cutting across the width of a singular narrow roll to prepare segments of any desired geometric size or shape. The segments may be subsequently packaged and/or further processed and incorporated into a testing device. Additional ingredients may be applied to the dried disintegrable film by, for example, printing, spraying, dusting, vapor adsorption processes, or combinations thereof, among others.

The dry film may be deposited on a single substrate and self-wound or may be sandwiched between two substrates. PSTC 4 (Relative Performance of Release Coatings) may be used to assess release force of the release treated paper or plastic. In one embodiment, the film/substrate combination or substrate/film/substrate combination is roll stable, meaning that the disintegrable film may be stored for extended periods without degradation or other issue. To assess roll stability, dynamic mechanical analysis may be used to assess the mechanical strength of the film under low frequency oscillation.

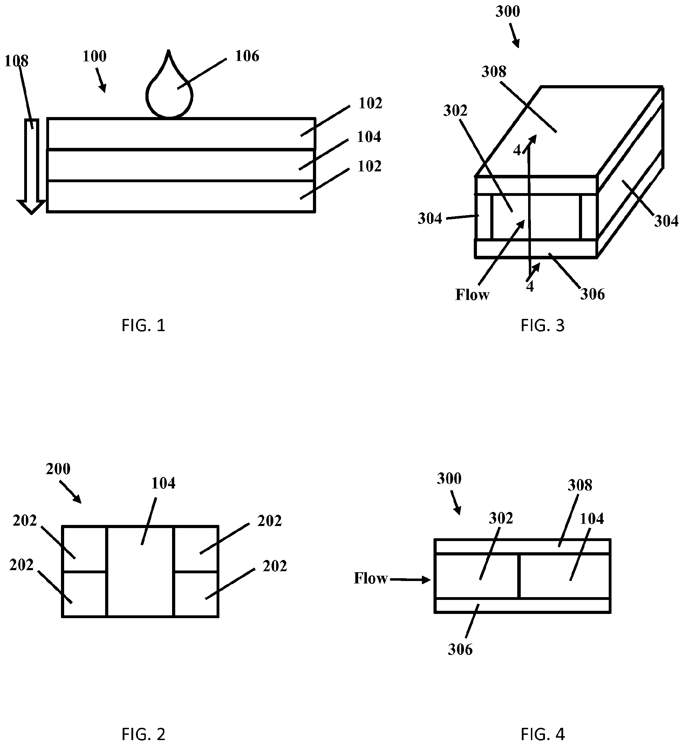

Referring to FIG. 1, in one embodiment, a first diagnostic testing device 100 includes a fluid permeable substrate 102 and a disintegrable film 104 disposed in contact with the fluid permeable substrate 102. Disposed in a vertical assay arrangement, the first diagnostic testing device 100 is arranged for a disintegrating fluid 106 to flow through the diagnostic testing device 100 in an assay direction 108.

Referring to FIG. 2, in another embodiment, a second diagnostic testing device 200 includes a disintegrable film 104 used to create a fluid channel upon application of a disintegrating fluid (not shown), such as blood, saliva, or urine. The disintegrable film 104 may be die cut from a roll to create a fluidic pathway pattern. The disintegrable film 104 may be sandwiched between adjacent layers such as adhesive coatings 202. Suitable adhesive coatings 202 include, but are not limited to, Adhesives Research, Inc.'s ARcare 8890, ARcare 7840, or ARcare 7841, which are double faced adhesive constructions used in forming fluidic channels for testing devices. The second diagnostic testing device 200 may include a single disintegrable film 104 or a plurality (not shown) of disintegrable films 104. In another embodiment, a fluid channel may be formed using, for example, a screen printed or jet printed high coat weight ink.

Referring to FIGS. 3-4, in another embodiment, a disintegrable film 104 may be used to protect and isolate a reactive layer 302 or reagent (not shown) in a third diagnostic testing device 300. The reactive layer 302 may include one or more reagents, and reactive layer 302 and the disintegrable film 104 are disposed within a fluid channel 304 and are supported by a support structure 306. The fluid channel 304 may or may not be covered by a cover 308. If present, the cover 308 may be a transparent cover, and may be, by way of example, an adhesive material heat bonded to the fluid channel 304.

The reactive layer 302 may be isolated by the disintegrable film 104 until the disintegrable film 104 is disintegrated by a disintegrating fluid 106 (not shown). In such case, the disintegrable film 104 need not include a reagent. The disintegrable film 104 is configured to act as a barrier to the reactive layer 302. Upon application of a disintegrating fluid 106, such as saliva, blood or urine, to the fluid channel 304, the disintegrating fluid 106 is held in reactive layer 302 by disintegrable film 104 for a predetermined amount of time to allow for the reaction to take place. After the predetermined amount of time, the disintegrable film 104 dissolves and the disintegrating fluid 106 continues to flow through the fluid channel 304. Thereby, the interaction between reactive components in the third diagnostic testing device 300 may be controlled by choice of disintegration time and/or conditions (e.g., pH, temperature, ionic strength, among others).

The embodiments of FIGS. 1-4 are exemplary only, and the disintegrable films 104 may be included in other testing devices, such as electronic devices, biosensors, various lateral and vertical flow devices, and test cards, among others. The disintegrable film 104 may also be packaged and provided as part of a test kit.

The disintegration times of the disintegrable film 104 may be approximated via a disintegration test. The disintegrable film 104 is coated and dried at a 2.0 ± 0.2 mil (50 ± 5 µm) thickness on a release liner. The disintegrable film 104 is then laminated with pressure to a Whatman Quantitative Filter Paper (Ashless, Grade 42, 90 mm). The release liner is removed. The time it takes for 6 µL of deionized water to reach the filter paper is recorded as the disintegration time. In one embodiment, the disintegration time is between 1 second to 180 seconds. In a further embodiment, disintegration time is between 15 seconds to 45 seconds. In an alternate further embodiment, disintegration time is between 60 seconds to 90 seconds.

The stability of the disintegrable film 104 may be evaluated using dynamic mechanical analysis data. A frequency sweep of the film at 25 °C is performed using a 25 mm parallel plate. The tan δ is evaluated at an angular frequency of 0.01 rad/s. A stable film will have a tan δ < 1, showing that the storage modulus is greater than the loss modulus at that point.

The following illustrative examples provide a number of specific formulations within the scope of the present invention. These examples are by way of illustration only and are not intended to be limiting in any way. Various alternative components, concentrations, and optional excipients (humectants, fillers, preservatives, etc.) may be utilized given the teachings herein to yield thin films of suitable film strength and disintegration profile.

### EXAMPLES

Specific embodiments of the invention are illustrated in the examples below. The examples are not meant to be limiting. Accordingly, additional formulations according to the invention may be made according to the teachings herein. The concentrations of the excipients are expressed by weight percent of the dried disintegrable films.

**Table 1. Examples**

| | PVP K-90 1,000-1,700 kDa | PEG 400 0.38-0.42 kDa | HPC-SL 100 kDa | PVP K-30 40-80 kDa |
|---|---|---|---|---|
| Ex. 1 | 50 wt% | 50 wt% | - | - |
| Ex. 2 | 34 wt% | 40 wt% | 26 wt% | - |
| Ex. 3 | 23 wt% | 37 wt% | - | 40 wt% |
| Comparative Ex. 1 | - | 30 wt% | - | 70 wt% |

Examples 1, 2, and 3 illustrate the composition for a disintegrable film 104 suitable for use as an adhesive and timing gate in a diagnostic device according to additional exemplary embodiments of the invention.

Examples 1, 2, and 3 are disintegrable films 104 which are tacky. Tackiness is evaluated using dynamic mechanical analysis data. A frequency sweep of the film at 25 °C is collected using a 25 mm parallel plate. The storage modulus is evaluated at an angular frequency of 1 rad/s. A tacky film will have a storage modulus of 3 x 10⁶ dyn/cm² or less.

For all examples, the polymers are slowly added to ethanol at 30% solids with constant mixing. Mixing continues until all components completely dissolve in the ethanol and the mix is homogeneous. The mixture is deaerated prior to coating onto a release liner. The coating is dried at 110 °C for 3 minutes to form the disintegrable films 104.

Example 1 illustrates an embodiment of a disintegrable film 104 having a high molecular weight polymer, in this case, PVP K-90 polymer, and a low molecular weight plasticizer, in this case, PEG 400, at ratios that are desirable.

Examples 2 and 3 illustrate embodiments of disintegrable films 104 having a high molecular weight water-soluble polymer, a low molecular weight water-soluble plasticizer, and an optional additional polymer. In these examples, even with the additional polymer, there is enough high molecular weight polymer for film strength and enough low molecular weight plasticizer for tackiness. Examples 2 and 3 only include one additional component, but in other embodiments, the disintegrable film 104 may include more than one additional component.

The disintegration times of Examples 1, 2, and 3 are 75 seconds, 76 seconds, and 23 seconds, respectively, using the previously described disintegration test method.

Tan δ at 0.01 rad/s and 25 °C of Examples 1, 2, and 3 are 0.589, 0.193, and 0.930, respectively.

The storage modulus at 1 rad/s and 25 °C of Examples 1, 2, and 3 are 1.21 x 10⁵ dyn/cm², 4.87 x 10⁵ dyn/cm², and 1.85 x 10⁴ dyn/cm², respectively.

The examples above illustrate disintegrable film formulations that disintegrate in biological fluids, such as saliva, urine or blood. The above examples are not meant to be limiting. Accordingly, many additional film compositions are possible within the scope of the invention, as defined by the appended claims and equivalents thereof.

The above description is only illustrative of preferred embodiments which achieve the objects, features and advantages of the present invention. It is not intended that the present invention be limited to the illustrated embodiments. Any modification of the present invention which comes with the spirit and scope of the following claims is considered part of the present invention.

Comparative Example 1 illustrates a state-of-the-art film composition formed in accordance with the disclosures of U.S. 7,470,397 with the reagent omitted for purposes of comparing film integrity. The molecular weight of PVP K-30 in Comparative Example 1 is not high enough to qualify as a high molecular weight and is not high enough to allow for sufficient strength in the film, as described in this invention. The film of Comparative Example 1 has a tan δ of 4.75 at 0.01 rad/s and 25 °C, indicating that it is not a rheologically and/or mechanically stable film.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A disintegrable film, comprising:
at least one water-soluble polymer having a molecular weight greater than 500 kDa, preferably greater than 700 kDa; and
at least one water-soluble plasticizer having a molecular weight less than 1 kDa, preferably less than 0.8 kDa.

2. A disintegrable film according to claim 1, wherein the disintegrable film is a tacky adhesive film.

3. A disintegrable film according to claim 2, wherein the disintegrable film includes a storage modulus of 3 x 10⁶ dyn/cm² or less at 1 rad/s and 25 °C.

4. A disintegrable film according to any of the preceding claims, wherein the disintegrable film includes a disintegration resistance factor sufficient to resist disintegration for a predetermined disintegration time after contact with a disintegrating fluid.

5. A disintegrable film according to claim 4, wherein the disintegrating fluid is selected from the group consisting of blood, saliva, urine, and combinations thereof.

6. A disintegrable film according to claim 4 or claim 5, wherein the disintegration time is between 1 second to 180 seconds.

7. A disintegrable film according to any of the preceding claims, wherein the disintegrable film includes a tan δ evaluated at an angular frequency of 0.01 rad/s and 25 °C of less than 1.

8. A disintegrable film according to any of the preceding claims, wherein:
the at least one water-soluble polymer constitutes between 3 wt% to 70 wt% of the disintegrable film, alternatively between 20 wt% to 50 wt% of the disintegrable film; and
the at least one water-soluble plasticizer constitutes between about 30 wt% to about 60 wt% of the disintegrable film, alternatively between about 35 wt% to about 55 wt% of the disintegrable film.

9. A disintegrable film according to any of the preceding claims, wherein the at least one water-soluble polymer is selected from the group consisting of water-soluble hydroxypropylmethyl cellulose, hydroxyethyl cellulose, hydroxypropyl cellulose, polyvinylpyrrolidone, poly(N-vinylpyrrolidone-co-vinyl acetate), other N-vinylpyrrolidone-based copolymers, carboxymethyl cellulose, sodium carboxy methyl cellulose, methyl cellulose, polyvinyl alcohol, sodium alginate, polyethylene glycol, xanthan gum, tragacanth, guar gum, gum arabic, carrageenan, polyacrylic acid, methylmethacrylate copolymer, carboxyvinyl copolymers, copolymers thereof, and combinations thereof.

10. A disintegrable film according to any of the preceding claims, wherein the at least one water-soluble plasticizer is selected from the group consisting of polyethylene glycol, polyoxamers, triacetin, triethyl citrate, glycerin, mannitol, xylitol, sorbitol, copolymers thereof, and combinations thereof.

11. A disintegrable film according to any of the preceding claims, wherein the at least one water-soluble polymer is polyvinylpyrrolidone or a N-vinylpyrrolidone-based copolymer, and the at least one water-soluble plasticizer is polyethylene glycol.

12. A disintegrable film according to any of the preceding claims, further including at least one water-soluble polymer having a molecular weight less than 700 kDa.

13. A disintegrable film according to any of the preceding claims, further including a water-soluble polymer having D-glucose units with a dextrose equivalent between 10 to 25, a starch, or combinations thereof.

14. The disintegrable film of claim 1, wherein the disintegrable film includes a thickness of 8 µm to 200 µm (0.3 mil to 8 mil).

15. A disintegrable film, comprising:
at least one water-soluble polymer having a molecular weight greater than 700 kDa; and
at least one water-soluble plasticizer having a molecular weight less than 0.8 kDa,
wherein:
the disintegrable film is a tacky adhesive film;
the disintegrable film includes a storage modulus of 3 x 10⁶ dyn/cm² or less at 1 rad/s and 25 °C;
the disintegrable film includes a disintegration resistance factor sufficient to resist disintegration for a disintegration time after contact with a disintegrating fluid;
the disintegrable film includes a tan δ evaluated at an angular frequency of 0.01 rad/s and 25 °C of less than 1;
the at least one water-soluble polymer constitutes between 3 wt% to 70 wt% of the disintegrable film; and
the at least one water-soluble plasticizer constitutes between 30 wt% to 60 wt% of the disintegrable film.
